**Europäisches Patentamt**

(19) **European Patent Office**

**Office européen des brevets**

(11) Publication number: **0 161 815**
**B1**

# (12) EUROPEAN PATENT SPECIFICATION

(45) Date of publication of the patent specification:
**22.07.87**

(21) Application number: **85302641.7**

(22) Date of filling: **16.04.85**

(51) Int. Cl.⁴: **F 28 F 11/00,** F 16 L 41/08,
**F 22 B 37/10**

(54) **Method for replacing tubes in a header or drum.**

(30) Priority: **27.04.84 US 604281**

(43) Date of publication of application:
**21.11.85 Bulletin 85/47**

(45) Publication of the grant of the patent:
**22.07.87 Bulletin 87/30**

(84) Designated Contracting States:
**AT BE CH DE FR GB IT LI LU NL SE**

(56) References cited:
**EP-A-0 036 821**
**FR-A-2 308 893**
**GB-A-394 129**
**GB-A-678 549**
**GB-A-854 271**
**GB-A-858 908**
**GB-A-1 568 692**
**US-A-4 103 738**
**US-H-986 007**

(73) Proprietor: **THE BABCOCK & WILCOX COMPANY,**
**1010 Common Street P.O. Box 60035, New**
**Orleans Louisiana 70160 (US)**

(72) Inventor: **Spada, Ralph Ernest, 1520 Pauli Street,**
**Canal Fulton Ohio 44614 (US)**
Inventor: **Shilot, Thomas, Route 1 P.O. Box 20,**
**Bidwell Ohio 45614 (US)**

(74) Representative: **Purvis, William Michael Cameron,**
**D. Young & Co. 10 Staple Inn, London WC1V**
**7RD (GB)**

LIBER, STOCKHOLM 1987

## Description

The invention relates to a method for repairing a tube in a header or drum.

In many applications in boilers and steam equipment, an array of tubes penetrates some kind of sealing plate, such as a tube sheet in a steam generator, or a drum or header in other applications. Particularly in drums and headers, these tubes may be subject to chemical and thermal corrosion and other degradation and may need to be replaced. In the prior art, such tubes were generally removed from the header or drum (generically a header-member) and wholly replaced with a new tube, which had to be expanded into the header-member to form a seal. Old tubes are typically removed from the header-member by cutting two opposed lengthwise slits through the portion of the tube that penetrates the header-member and then squeezing the tube pieces together so that the tube can be extracted from the header-member. Typically the slits are cut with a cutting torch, which generally results in damage to the hole in the header-member. Both these problems make tube replacement awkward and extremely time consuming and expensive.

According to the present invention there is provided a method of repairing a tube that penetrates a header-member characterised by the steps of:

(a) cutting off the tube substantially flush with one surface of the header-member;

(b) machining the cut end of the tube so that it is recessed into the header-member by a predetermined amount;

(c) welding the tube at its cut end to the header-member;

(d) inserting a new tube into the recess; and

(e) welding the new tube to the header-member.

The method of the invention for replacing defective tubes in a header-member can significantly reduce the likelihood of damaging the header-member, can provide a firm, strong connection between the new tube and the header-member, and secure the old tube to the header-member. The method does not require replacing the entire old tube.

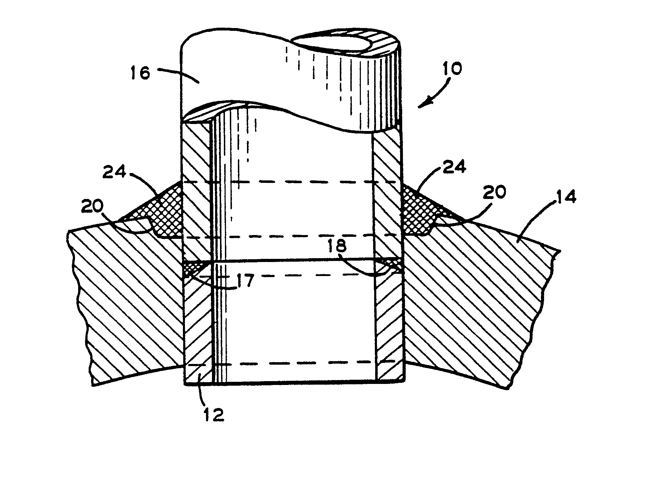

The invention is diagrammatically illustrated by way of example with reference to the accompanying drawing which shows a sectional elevation of a field welded tube connection effected by a method according to the invention.

Referring to the drawing, there is shown a field welded tube connection 10 wherein an old tube 12 embedded in a header-member 14, which may be a header, drum or the like and typically is sealed in the header-member 14, has been cut flush with the original top surface of the header-member 14 and subsequently has been machined down into the header-member 14 without enlarging the original hole which the old tube 12 was seated in, to provide a seat for a new tube 16, according to known techniques.

A bevel 17 is formed on the now recessed end of the old tube 12. The bevel 17 is then filled by a weld bead 18, which secures the old tube 12 to the header-member 14. The weld bead 18 secures the old tube 12 in the header-member 14, to prevent the old tube 12 from falling out of header-member 14 or otherwise causing difficulties in the future. Naturally, bevelling the old tube 12 is not strictly required, since the weld bead 18 can be laid on a flush tube end; but the bevel 17 increases the surface area of the old tube 12 that can be welded and helps prevent the welder from closing a portion of the end of the told tube 12 during welding. The bevel 17 may be in a range of from about 15° to about 50° of arc, with a bevel of about 30° being preferred.

An area of the header-member surrounding the hole in the header-member 14 is recessed to form a countersink 20 by machining. The new tube 16 is then inserted into the seat created thereby for it and held in the proper attitude while a weld bead 24 is laid down to secure the new tube 16 to the header-member 14. The weld bead 24 fills the countersink 20 and, in a preferred embodiment, tapers upwardly in a conical fashion to increase the surface area of the header-member 14 and the new tube 16 that are welded.

When the weld bead 24 cools, shrinkage tends to pull the new tube 16 farther into the header-member 14. To accommodate this shrinkage motion, it may be desirable to leave a gap on the order of from about 2.4 mm (3/32 inch) to about 6.35 mm (1/4 inch) between the ends of the new tube 16 and the old tube 12 when laying down the weld bead 24 with a distance of about 4.8 mm (3/16 inch) being preferred. In actual practice, however, it has been been found that the old tube 12 and the new tube 16 may be abutting during welding of the weld bead 24 without creating difficulty.

The old tube 12, that remains in the header-member 14, serves no useful purpose and its structural integrity is not important. The method of the present invention may be used with a wide variety of members. For example, it has been successfully used with tubes from less than 25.4 mm (1 inch) to more than 127 mm (5 inches) in diameter and has been employed on 203 mm (8 inch) pipes and 1.0 M (6 foot) drums, both including many tubes. The header-member 14 may be from approximately 12.7 mm (.500 inch) to 203 mm (8 inches) or more thick.

## Claims

1. A method of repairing a tube that penetrates a header-member characterised by the steps of:

(a) cutting off the tube (12) substantially flush with one surface of the header-member (14);

(b) machining the cut end of the tube (12) so that it is recessed into the header-member (14) by a predetermined amount;

(c) welding (18) the tube (12) at its cut end to the header-member (14);

(d) inserting a new tube (16) into the recess; and

(e) welding (24) the new tube (16) to the header-member (14).

2. A method according to claim 1, wherein step (b) further includes forming a bevel (17) on the recessed old tube end (12).

3. A method according to claim 2, wherein step (d) further comprises laying a weld bead (18) about the bevel (17) such that the bevel (17) is filled by the weld bead (18).

4. A method according to any one of claims 1 to 3 further comprising the step of forming a countersink (20) in the header-member (14) for providing a greater area of exposed new tube (16) for welding to the header-member (14).

5. A method according to claim 2, wherein the angle of the bevel (17) is in a range from about 15° to about 50° of arc.

6. A method according to any one of claims 1 to 5, wherein step (e) further comprises forming a weld bead (24) that is approximately conically shaped to increase the surface area of the new tube (16) that is welded to the header-member (14).

7. A method according to any one of claims 1 to 6, wherein step (e) further comprises abutting the old tube (12) and the new tube (16) and holding the new tube (16) in a predetermined attitude during the welding (24) of step (e).

8. A method according to any one of claims 1 to 7, wherein step (e) further comprises maintaining a distance of from about 2.4 mm (3/32 inch) to about 6.35 mm (1/4 inch) between the old tube (12) end and the new tube (16) end during welding (24) of step (e) to allow for the pull down effect from cooling shrinkage of the weld bead (24) created in step (e).

versehenen alten Rohrende (12) einschließt.

3. Verfahren nach Anspruch 2, bei dem die Stufe (d) außerdem das Legen einer Schweißraupe (18) um die Abschrägung (17) einschließt, so daß die Abschrägung (17) von der Schweißraupe (18) gefüllt wird.

4. Verfahren nach einem der Ansprüche 1 bis 3, das außerdem die Stufe einer Ausbildung einer Vertiefung (20) in dem Verbindungsteil (14) einschließt, um einen größeren Bereich von freiliegendem neuem Rohr (16) zum Verschweißen mit dem Verbindungsteil (14) zu bekommen.

5. Verfahren nach Anspruch 2, bei dem der Winkel der Abschrägung (17) im Bereich von etwa 15 bis etwa 50 Bogengraden liegt.

6. Verfahren nach einem der Ansprüche 1 bis 5, bei dem Stufe (e) außerdem die Ausbildung einer Schweißraupe (24), die etwa kegelförmig ist, enthält, um die Oberfläche des neuen Rohres (16), die mit dem Verbindungsteil (14) verschweißt wird, zu vergrößern.

7. Verfahren nach einem der Ansprüche 1 bis 6, bei dem Stufe (e) außerdem ein Aneinanderstoßenlassen des alten Rohres (12) und des neuen Rohres (16) und ein Halten des neuen Rohres (16) in einer vorbestimmten Stellung während des Schweißens (24) der Stufe e einschließt.

8. Verfahren nach einem der Ansprüche 1 bis 7, bei dem die Stufe (e) außerdem ein Einhalten eines Abstandes von etwa 2,4 mm (3/32 inch) bis etwa 6,35 mm (1/4 inch) zwischen dem Ende des alten Rohres (12) und dem Ende des neuen Rohres (16) während des Schweißens (24) der Stufe e einschließt, um den Herunterzieheffekt aufgrund der Kühlungsschrumpfung der in der Stufe e erzeugten Schweißraupe (24) zu erlauben.

## Patentansprüche

1. Verfahren zum Ausbessern eines Rohres, das ein Verbindungsteil durchdringt, <u>gekennzeichnet durch</u> die Stufen

(a) eines Abschneidens des Rohres (12) im wesentlichen bündig mit einer Oberfläche des Verbindungsteiles (14),

(b) einer spanabhebenden Bearbeitung des abgeschnittenen Endes des Rohres (12) um eine vorbestimmte Menge, so daß in dem Verbindungsteil (14) eine Vertiefung ausgebildet wird,

(c) eines Verschweißens (18) des Rohres (12) an seinem abgeschnittenen Ende mit dem Verbindungsteil (14),

(d) eines Einfügens eines neuen Rohres (16) in die Vertiefung und

(e) eines Verschweißens (24) des neuen Rohres (16) mit dem Verbindungsteil (14).

2. Verfahren nach Anspruch 1, bei dem die Stufe (b) außerdem die Ausbildung einer Abschrägung (17) an dem mit Vertiefung

## Revendications

1. Procédé de réparation de tube pénétrant dans un élément collecteur caractérisé par les étapes consistant à:

(a) sectionner le tube (12) sensiblement au ras d'une surface de l'élément collecteur (14);

(b) usiner l'extrémité sectionnée du tube (12) de façon qu'elle se trouve enfoncée dans l'élément collecteur à un degré déterminé;

(c) souder (18) le tube (12) par son extrémité sectionnée à l'élément collecteur (14);

(d) insérer un nouveau tube (16) dans l'enfoncement,;

(e) souder (24) le nouveau tube (16) à l'élément collecteur (14).

2. Procédé selon la revendication 1, dans lequel l'étape (b) comporte encore le façonnage d'un biseau (17) sur l'extrémité enfoncée de l'ancien tube (12).

3. Procédé selon la revendication 2, dans lequel l'étape (d) comprend encore la pose d'un cordon de soudure (18) autour du biseau (17) de façon que le biseau (17) soit rempli par le cordon de soudure (18).

4. Procédé selon l'une quelconque des revendications 1 à 3 comportant encore l'étape consistant à façonner une fraisure (20) dans l'élément de collecteur (14) pour établir une plus grande aire de nouveau tube exposé (16) pour soudage à l'élément collecteur (14).

5. Procédé selon la revendication 2, dans lequel l'inclinaison du biseau (17) est comprise entre environ 15° et environ 50° d'arc.

6. Procédé selon l'une quelconque des revendications 1 à 5, dans lequel l'étape (e) comprend encore l'établissement d'un cordon de soudure (24) qui est de forme approximativement conique pour augmenter l'aire superficielle du nouveau tube (16) soudée à l'élément collecteur (14).

7. Procédé selon l'une quelconque des revendications 1 à 6 dans lequel l'étape (e) comprend encore l'aboutement de l'ancien tube (12) et du nouveau tube (16) et le maintien du nouveau tube (16) dans une attitude déterminée pendant le soudage (24) de l'étape (e).

8. Procédé selon l'une quelconque des revendications 1 à 7, dans lequel l'étape (e) comprend encore le maintien d'une distance d'environ 2,4 mm (3/32 d'inch) à environ 6,35 mm (1/4 d'inch) entre l'extrémité de l'ancien tube (12) et l'extrémité du nouveau tube (16) pendant le soudage (24) de l'étape (e) pour permettre l'effet d'attraction vers le bas découlant du retrait par refroidissement du cordon de soudure (24) établi à l'étape (e).